# EUROPEAN PATENT APPLICATION

(11) **EP 3 525 138 A1**
(43) Date of publication of application: **14.08.2019**
(21) Application number: 18211066.8
(22) Date of filing: 07.12.2018
(51) Int. Cl.: G06N 3/063

(54) **OPERATION APPARATUS, OPERATION EXECUTION DEVICE, OPERATION EXCECUTION METHOD AND NON-TRANSITORY COMPUTER-READABLE STORAGE MEDIUM**

(30) Priority: 13.02.2018 CN 201810151426
(71) Applicant: Beijing Kuangshi Technology Co., Ltd., Beijing 100190 (CN)
(72) Inventor: Zhou, Shuchang, Haidian District, Beijing,, Beijing 100190 (CN); Hu, Chen, Haidian District, Beijing,, Beijing 100190 (CN); Liang, Zhe, Haidian District, Beijing,, Beijing 100190 (CN)
(74) Representative: Gulde & Partner

(57) **Abstract**

This disclosure provides an operation apparatus, an operation execution device, an operation execution method and a non-transitory computer-readable storage medium. The operation execution device includes: a controller, a memory and an operation apparatus; the memory is configured to store a preset single instruction set; the single instruction set includes a single instruction corresponding to a per-layer operation when the operation apparatus performs a multi-layer operation; each of the single instructions includes a module selecting parameter and a module operating parameter; the controller is configured to read a current single instruction corresponding to a current layer operation, and parse the module selecting parameter and the module operating parameter to determine a operation path; the operation apparatus is configured to be connected with the operation path, and perform operation on input data of the operation apparatus in the current layer operation by using the operation path, generate output data of the current layer operation.

## Description

### TECHNICAL FIELD

The present disclosure relates to the field of artificial intelligence technology, and more particularly, to an operation apparatus, an operation execution device, an operation execution method and a non-transitory computer-readable storage medium.

### BACKGROUND

In areas such as image recognition, speech recognition and text recognition, neural networks have been widely used for their powerful computing power, and neural networks are used to process images in image processing devices such as capturers and face recognizers.

When a neural network is applied to a product, operations of the neural network need to be implemented by aid of hardware such as an FPGA (Field Programmable Gate Array) or an ASIC (Application Specific Integrated Circuit). Since the neural network needs to involve a plurality of operation layers such as convolution, pooling, and fully connected, each operation layer corresponds to a network structure under the same or different computing logic; different hardware structures need to be designed for different network structures, such implementation of the neural network is extremely apt to waste hardware resources.

### SUMMARY

In view of this, the objectives of the present disclosure are to provide an operation apparatus, an operation execution device and an operation execution method, which can make improvement with respect to the technical problem that the hardware resources for implementing the neural network are apt to waste, and can effectively improve utilization of the hardware resources.

In order to achieve the above objectives, the technical solutions adopted by the embodiments of the present disclosure are as follows:

An embodiment of the present disclosure provides an operation apparatus, wherein the operation apparatus is configured to implement a multiplexing neural network architecture, the operation apparatus includes a plurality of functional operation modules, and the functional operation modules include at least one of: a concat module, an unpooling module, a convolution module and a quantizing module; the plurality of functional operation modules are connectable by way of combinations to form a plurality of operation paths; wherein each of the operation paths is used to implement a computing logic; the computing logic includes at least one of: a convolution processing, a deconvolution processing, a pooling processing, a quantizing processing and a fully connected processing.

The embodiment of the present disclosure further provides an operation execution device, comprising: a controller, a memory and the operation apparatus according to the first aspect; the memory is configured to store a preset single instruction set; the single instruction set includes a single instruction corresponding to a per-layer operation when the operation apparatus performs a multi-layer operation; each of the single instructions includes a module selecting parameter and a module operating parameter; the controller is configured to read, from the memory, a current single instruction corresponding to a current layer operation as required by the operation apparatus, and parse the module selecting parameter and the module operating parameter included in the current single instruction, so as to determine a operation path corresponding to the current single instruction; the controller is further configured to send a control signal to the operation apparatus, so that the operation apparatus is connected with the operation path corresponding to the current single instruction; the operation apparatus is configured to be connected with the operation path corresponding to the current single instruction under control of the controller, and perform operation on input data of the operation apparatus in the current layer operation by using the operation path corresponding to the current single instruction, generate output data of the current layer operation; wherein the input data of the current layer operation is output data obtained by the operation apparatus from a previous layer operation; when the current layer is the first layer, the input data of the first layer operation is an image to be processed.

The embodiment of the present disclosure further provides an operation execution method, the method being applied to the operation execution device of the second aspect, the method being executed by a controller of the operation execution device, the method comprising: when a current layer operation of the operation apparatus starts, reading a current single instruction corresponding to a current layer operation; parsing the module selecting parameter and the module operating parameter in the current single instruction, and determining a functional operation module required by the current layer operation and a module operating parameter corresponding to the functional operation module; determining a operation path in the operation apparatus based on the functional operation module required by the current layer operation and the module operating parameter corresponding to the functional operation module; wherein the operation path is composed by connecting the functional operation module required by the current layer operation; inputting input data of the current layer operation to the operation apparatus, so that the operation apparatus performs operation on the input data by using the determined operation path to generate output data of the current layer operation; wherein the input data of the current layer operation is output data obtained by the operation apparatus from a previous layer operation; when the current layer is the first layer, the input data of the first layer operation is an image to be processed.

The embodiment of the present disclosure provides a non-transitory computer-readable storage medium having stored thereon a computer program, wherein steps of the method as stated above are carried out when the computer program is executed by a processor.

The embodiment of the present disclosure provides an operation apparatus, which can be used to implement a multiplexing neural network architecture, the operation apparatus includes a plurality of functional operation modules, such as a concat module, an unpooling module, a convolution module and a quantizing module, the plurality of functional operation modules are connectable by way of flexible combinations to form a plurality of operation paths, thus implementing the corresponding computing logics. Such operation apparatus provided in the embodiment needs not to construct a corresponding hardware structure separately for each network structure, and such multi-functional multiplexing operation apparatus saves hardware resources very effectively.

On the basis of the operation apparatus, the embodiment of the present disclosure further provides an operation execution device and method, a controller can control, by means of parsing a current single instruction corresponding to a current layer operation as required by the operation apparatus, the operation apparatus to be connected with the operation path corresponding to the current single instruction, so as to perform the current layer operation. This manner can control the same operation apparatus to compile so as to form different network structures based on the single instruction, thus implementing logical operations of all layers of the neural network. It is not necessary to set up corresponding hardware for different network structures separately, which greatly saves the hardware resources and effectively improves utilization of the hardware resources.

Other features and advantages of the present disclosure will be set forth in the description which follows, or parts of the features and advantages may be deferred from the specification or be determined undoubtedly therefrom or be learned by implementing the above techniques of the present disclosure.

For the above described objectives, features, and advantages of the present disclosure to be more apparent and understandable, preferred embodiments will be illustrated below in combination with the drawings, so as to provide detailed explanation as follows.

### BRIEF DESCRIPTION OF THE DRAWINGS

In order to more clearly illustrate the specific implementations of the present disclosure or the technical solutions in the prior art, drawings necessary for describing the specific implementations or the prior art will be briefly introduced below, obviously, the following drawings are parts of the implementations of the present disclosure, and for a person of ordinary skill in the art, it is possible to attain other drawings based on these drawings without paying creative effort.
FIG. 1 shows a schematic diagram of structure of an electronic device provided by an embodiment of the present disclosure;
FIG. 2 shows a schematic diagram of structure of an operation apparatus provided by an embodiment of the present disclosure;
FIG. 3 shows a schematic diagram of a quantizing processing provided by an embodiment of the present disclosure,
FIG. 4 shows a schematic diagram of structure of an operation execution device provided by an embodiment of the present disclosure;
FIG. 5 shows a schematic diagram of a convolution processing of an operation execution device according to an embodiment of the present disclosure;
FIG. 6 shows a schematic diagram of a deconvolution processing of an operation execution device according to an embodiment of the present disclosure;
FIG. 7 shows a schematic diagram of a fully connected processing of an operation execution device according to an embodiment of the present disclosure;
FIG. 8 shows a schematic diagram of a quantizing processing of an operation execution device according to an embodiment of the present disclosure; and
FIG. 9 shows a flowchart of an operation execution method according to an embodiment of the present disclosure.

### DETAILED DESCRIPTION OF THE EMBODIMENTS

To make the objectives, technical solutions, and advantages of the present disclosure be more clear and obvious, hereinafter, the technical solutions of the present disclosure will be described clearly and comprehensively in combination with the drawings, obviously, these described embodiments are parts of the embodiments of the present disclosure, rather than all of the embodiments thereof. All the other embodiments obtained by a person of ordinary skill in the art based on the embodiments of the present disclosure without paying creative efforts fall into the protection scope of the present disclosure.

Considering that hardware needs to be set up separately for different neural network structures when hardware is adopted to implement the neural network in the prior art, a large hardware resource is required, and only the hardware under the network structure involved with a operation will be used, and the hardware corresponding to the network structure not involved with a operation will be idle, resulting in low hardware utilization. To improve with respect to this problem, an operation apparatus, an operation execution device and an operation execution method are provided in the embodiments of the present disclosure, this technique can be applied to hardware implementation of the neural network, and the embodiments of the present disclosure will be described in detail below.

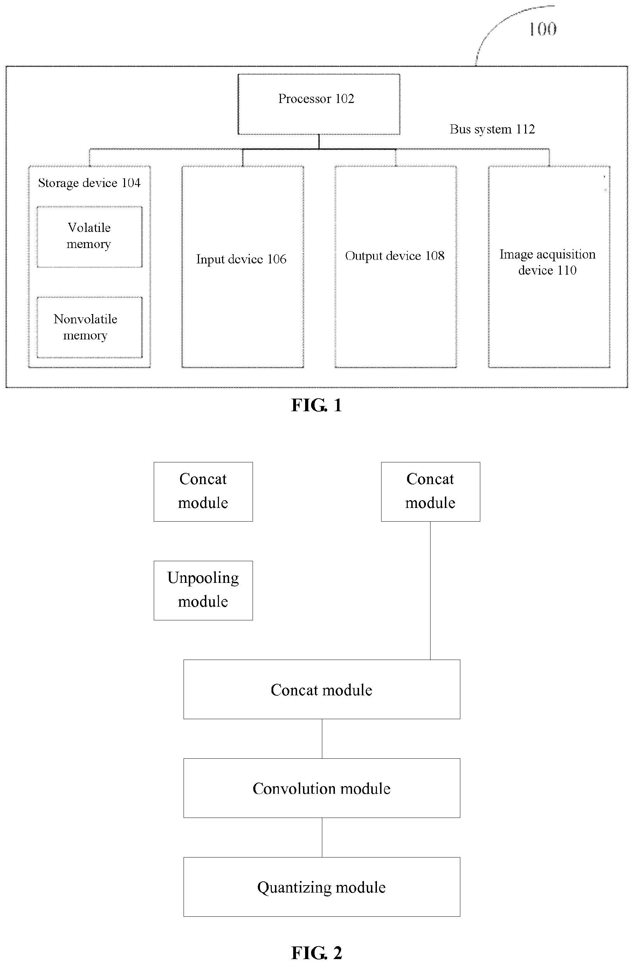

First, an exemplary electronic device 100 for implementing an operation apparatus, an operation execution device and an operation execution method according to an embodiment of the present disclosure will be described with reference to FIG. 1.

FIG. 1 shows a schematic diagram of structure of an electronic device, the electronic device 100 comprises one or more processors 102, one or more storage devices 104, an input device 106, an output device 108 and an image acquisition device 110, these components are interconnected through a bus system 112 and/or other forms of connection mechanisms (not shown). It should be noted that, components and structures of the electronic device 100 shown in FIG. 1 are merely exemplary, not restrictive, and the electronic device may have other components and structures as needed.

The processor 102 may be implemented by using at least one of a digital signal processor (DSP), a field programmable gate array (FPGA), a programmable logic array (PLA), and an application specific integrated circuit ASIC, the processor 102 may be a combination of one or more of a central processing unit (CPU) or other forms of processing unit with data processing capability and/or instruction execution capability, can control other components in the electronic device 100 to perform desired functions.

The storage device 104 may include one or more computer program products, said computer program products may include various forms of computer-readable storage medium, such as a volatile memory and/or a nonvolatile memory. The volatile memory may include, for example, a random access memory (RAM) and/or a cache or the like. The nonvolatile memory may include, for example, a read only memory (ROM), a hard disk, a flash memory or the like. One or more computer program instructions may be stored on the computer-readable storage medium, and the processor 102 may execute the program instructions to implement client functions (implemented by the processor) in embodiments of the present disclosure described below and/or other desired functions. Various application programs and various data may also be stored in the computer-readable storage medium, such as various data used and/or generated by the application programs or the like.

The input device 106 may be a device used by a user to input an instruction, and may include one or more of a keyboard, a mouse, a microphone, a touch screen or the like.

The output device 108 may output various types of information (e.g., image or sound) to the outside (e.g., a user), and may include one or more of a display, a speaker or the like.

The image acquisition device 110 may capture images (e.g., photos, videos, etc.) desired by the user and store the captured images in the storage device 104 for use by other components.

Exemplarily, the exemplary electronic device for implementing an operation apparatus, an operation execution device and an operation execution method according to an embodiment of the present disclosure may be implemented as a smart terminal such as a video camera, a capturer, a face recognition terminal, a computer, etc.

This embodiment provides an operation apparatus, the operation apparatus can be used to implement a multiplexing neural network architecture, the multiplexing neural network has multiple functions and can implement various computing logics. The operation apparatus includes a plurality of functional operation modules, and the functional operation module may include at least one of: a concat module, an unpooling module, a convolution module and a quantizing module. That is, the operation apparatus may be composed by a plurality of modules from among the concat module, the unpooling module, the convolution module and the quantizing module, and combination manners of the modules and connection relationships between the modules are diversified, and may be flexibly set according to practical needs in particular.

The plurality of functional operation modules are connectable by way of combinations to form a plurality of operation paths; wherein each of the operation paths is used to implement a computing logic; the computing logic includes at least one of: a convolution processing, a deconvolution processing, a pooling processing, a quantizing processing and a fully connected processing. In practical applications, if a plurality of operation channels composed by the same functional modules can realize different operation effects due to different module operating parameters and/or different connection relationships of the modules, they may also be regarded as belonging to different operation paths.

The operation apparatus provided above by the embodiment of the present disclosure comprises a plurality of functional operation modules, such as a concat module, an unpooling module, a convolution module and a quantizing module, and the plurality of functional operation modules may be connected flexibly by way of combinations to form a plurality of operation paths, thereby realizing the corresponding computing logics. The operation apparatus does not need to separately construct a corresponding hardware structure (specifically, a operation hardware structure including logic circuits, hereinafter referred to as hardware) for each network structure, and only needs to directly select a operation path according to needs, such multi-functional multiplexing operation apparatus saves hardware resources very effectively.

In practical applications, the operation apparatus may be implemented by hardware such as an FPGA or an ASIC, respective functional operation modules may be composed by various logic circuits such as an adder and a multiplier or the like to implement corresponding functional operations. For the sake of understanding, basic functions of the above functional operation modules are briefly described as follows.

The concat module (also known as the concat module) can be used to implement channel concating, specifically, it can implement concating of an input feature map in a channel dimension. When the input of the neural network is a multi-dimensional feature map, the concat module can find multi-dimensional tensor data (such as tensor data including three dimensions of length, width and channel) through operations such as memory addressing, and perform a concating processing on the tensor data in the channel dimension, the feature map originally having a certain number of channels can be converted into a feature map having more channels, so as to improve operation performance of the network.

The unpooling module (also known as an unpooling module) can be used to expand the original feature map. The unpooling module can expand the length and width of the original feature map according to preset unpooling parameters. For example, when an unpooling parameter (the unpooling size) is 2*2, the unpooling module can expand the length and width of the original feature image to twice the original length and width, thereby realizing the function of expanding the image and also contributing to that the features of different sizes are subjected to the concating processing.

A convolution module (also known as a convolution module) can be used to perform a convolution processing on the feature data according to a set convolution kernel, so as to implement feature mapping.

A quantizing module (also referred to as a quantizing module) can be used to quantize the feature data according to a set quantizing parameter (such as a T threshold parameter), so as to reduce the bit number of parameters, reduce the amount of parameters, and implement quantitative compression of the neural network.

Of course, in a specific application, the functional operation modules may further include a deconvolution module, a pooling module, or a fully connected module. Among them, the deconvolution module (also known as the deconvolution module) can be used to implement expansion of the feature map after the convolution processing, so as to function as restoring. The pooling module can be used to reduce the data dimension, reduce the parameters while preserving the main features; it can also achieve invariance of data such as translational distortion, rotation invariance, scale invariance, and the like. The fully connected module can be used to integrate multi-dimensional information and classify the extracted features.

In this embodiment, each functional operation module corresponds to one or more operation types; wherein the operation types include a concat operation, an unpooling operation, a convolution operation, a pooling operation, a quantizing operation, a nonlinear operation or a fully connected operation. In a specific implementation, the concat operation may be implemented by adopting a concat module, the unpooling operation may be implemented by adopting an unpooling module, and the convolution operation may be implemented by adopting a convolution module. The pooling operation may be implemented by adopting a pooling module in an implementation, specifically, an average or maximum pooling processing may be performed after the convolution processing; it may be implemented by adopting a convolution module in another implementation, specifically, a convolution module with a stride may be used instead of the pooling module, the convolution and pooling processing can be implemented without a pooling module. The quantizing operation may be implemented by adopting a quantizing module; the nonlinear operation may be implemented by adopting a nonlinear activation function in an implementation, and may be implemented by adopting a quantizing module in another implementation, specifically, the quantizing module adopts the manner of quantizing a floating point value into a multi-bit bit value instead of a nonlinear activation function. The fully connected operation may be implemented by adopting a fully connected module in an implementation, and may be implemented by adopting a convolution module having a convolution kernel size of 1*1 in another implementation.

The operation apparatus may include a combination of a plurality of functional operation modules. In an implementation, reference may be made to the schematic diagram of structure of an operation apparatus shown in FIG. 2, which schematically indicates a multiplexing neural network architecture. As can be seen from FIG. 2, the operation apparatus includes a concat module, an unpooling module, a convolution module and a quantizing module. In the operation process of the multiplexing neural network architecture, the multiplexing neural network architecture can implement multiple network structures by combining such functional modules of the concat module, the unpooling module, the convolution module and the quantizing module and setting the module parameters, each network structure corresponds to one operation path, different computing logics can be implemented. It should be noted that FIG. 2 is only a simple illustration, the types, numbers and connection relationships of the functional operation modules may be flexibly set in practical applications.

It can be understood that when a multi-layer operation is performed by the multiplexing neural network architecture, the functional operation modules required for operation of a different layer are different, that is, different operation paths may be adopted for computing, thereby implementing different computing logics.

Considering that all kinds of neural network models basically require the concat operation and the convolution operation, in an implementation, each of all of the operation paths includes at least the concat module and the convolution module. Based on this, this embodiment provides the following several examples of the operation path:

First Example: a first operation path further includes the unpooling module, and the convolution module is connected after the unpooling module, so as to implement a deconvolution processing.

Second Example: in a second operation path, the convolution module includes a convolution layer having a convolution kernel size of 1*1 to implement a fully connected processing.

Third Example: a third operation path further includes a quantizing module, and the quantizing module is disposed at an end of the third operation path, so as to implement a quantizing processing.

Fourth Example: a fourth operation path includes only the concat module and the convolution module, so as to implement a convolution processing.

It should be noted that only a few simple operation paths for implementing typical computing logics are proposed in the above. In practical applications, selection of operation path is related to the computing logic to be performed and the type of functional operation module included in the multiplexing neural network, there may be multiple implementations of the operation path, those described here should not be considered as limiting.

In order to further improve utilization of the hardware resources, the multiplexing neural network architecture provided in this embodiment further adopts the following manner:

First manner: the multiplexing neural network architecture needs not to set the pooling module, that is, the convolution module needs not to be followed by the average or maximum pooling module, instead, the convolution with a stride is adopted directly to achieve the convolution operation and the pooling operation concurrently, specifically, the convolution module provided in this embodiment includes a convolution layer with a stride; the convolution module is used to implement the convolution operation when the stride of the convolution layer is 1, and the convolution module is used to implement the convolution operation and the pooling operation concurrently when the stride of the convolution layer is not 1. This manner enables the convolution module to be multiplexed without having to set up a pooling module, which saves the hardware resources and improves utilization of the hardware resources.

The neural network in the prior art needs to perform a convolution processing followed by a pooling processing, and each operation needs to continuously access the memory to read data to implement the operation. In this manner, by adopting the convolution layer with a stride, the convolution processing and the pooling processing can be combined in one convolution process to be completed, memory access and computation amount can be better reduced while utilization of the hardware resources of the convolution module is improved.

Second Manner: the multiplexing neural network architecture needs not to set a nonlinear activation function, that is, it does not require a separate nonlinear activation processing, but can be implemented directly by directly adopting a quantizing module. Specifically, the quantizing module provided in this embodiment can implement parameter compression and non-linear operation by quantizing a floating point value to a low bit value, the low bit value is relatively lower bit, and may be expressed by k-bit in particular, and the value k may be flexibly set as needed, that is, the quantizing module provided in this embodiment can adopt k-bit quantizing instead of the nonlinear activation function. Common nonlinear functions include such as sigmoid functions: 1/((1+e^(-x))), relu function: f(x)=max(x,0), etc., introduction of nonlinear functions can make the network have more generalization ability, taking the relu function as an example, it can make some neuron outputs in the neural network be 0, causing network sparsity, which alleviates over-fitting to some extent, and is closer to real neurons activation model at the same time. The traditional neural network model needs to introduce additional nonlinear activation processing at the end, but in this manner, the quantizing processing of the quantizing module is directly used to obtain nonlinearity of the neural network, the corresponding nonlinearity ability and accuracy can be maintained while compressing the network parameters.

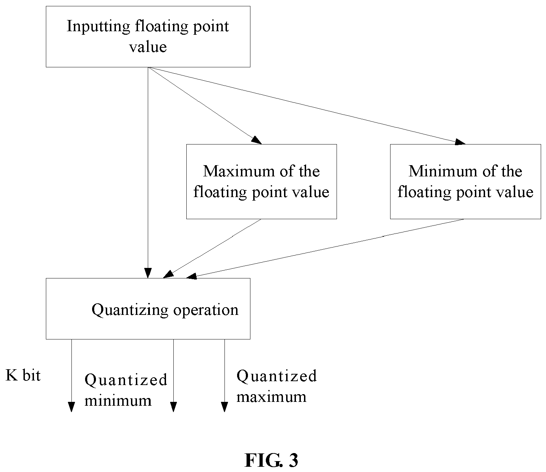

For ease of understanding, referring to the schematic diagram of a quantizing processing shown in FIG. 3, the quantizing processing may be mainly implemented by a quantizing module. When inputting a floating point value under the current network structure, it is first necessary to store a maximum and a minimum of the floating point value, then each floating point value is expressed by adopting the k-bit integer, wherein the value k may be set in advance as needed, k-bit may represent a relatively low bit value in practical applications. In FIG. 3, the quantizing operation is performed in the above manner to obtain a real value expressed in k-bit, and the quantized maximum and the quantized minimum are also clearly illustrated. An example is as follows: assuming k=8, a value range constituted by the maximum and minimum of the floating point value needs to be spatially linearly divided into 256 segments, as for each segment, a unique 8-bit integer represents a real value within the segment, for example, in an interval of (-3.0, 6.0), byte 0 represents -3.0, byte 255 represents 6.0, and so on, and so forth, byte 128 represents 1.5, thereby obtaining low bit width output or high bit width output of k-bit.

Through the quantizing module in this manner, not only the neural network can be compressed but also the nonlinearity can be introduced when the quantizing processing is implemented, so as to better replace the traditional nonlinear activation function and improve the hardware resource utilization of the quantizing module.

Third manner: the multiplexing neural network architecture does not require a separate deconvolution (transposition convolution) module, an unpooling module followed by a convolution module may be adopted to achieve this. In the prior art, the convolution processing is a common processing of most neural network structures, and a deconvolution processing may be also required in the network structure such as a full convolutional network, thus a deconvolution module also needs to be separately set up, and the convolution module cannot be multiplexed. In this manner, the deconvolution processing can be implemented by the unpooling module followed by the convolution module, that is, the deconvolution processing is replaced by adopting the corresponding unpooling processing, in this manner, the convolution module can be multiplexed, which achieves better utilization of the hardware resources.

Fourth manner: the multiplexing neural network architecture needs not to separately set a fully connected module, the convolution module with a convolution kernel size of 1*1 can achieve the fully connected processing. This manner enables the convolution module to be multiplexed, which also improves utilization of the hardware resources, and also makes the multiplexing neural network architecture more streamlined.

Through the above four manners, the multiplexing neural network can better save hardware resources, existing functional operation modules such as the convolution module and the quantizing module can be multiplexed in various operation processing, which effectively improves utilization of the hardware resources.

Based on the operation apparatus as stated above, this embodiment provides an operation execution device, comprising: a controller, a memory and the operation apparatus in the Second Embodiment; the memory is configured to store a preset single instruction set; the single instruction set includes a single instruction corresponding to a per-layer operation when the operation apparatus performs a multi-layer operation; each of the single instructions includes a module selecting parameter and a module operating parameter;

Of course, the memory also stores data required by respective functional operation modules in the operation apparatus at the time of operation, the parameters corresponding to the respective functional operation modules, such as weight data, convolution kernel parameters required by the convolution module, and threshold data required by the quantizing module, are stored, no details are repeated herein.

The controller is configured to read, from the memory, a current single instruction corresponding to a current layer operation as required by the operation apparatus, and parse the module selecting parameter and the module operating parameter included in the current single instruction, so as to determine a operation path corresponding to the current single instruction; the controller is further configured to send a control signal to the operation apparatus, so that the operation apparatus is connected with the operation path corresponding to the current single instruction. Specifically, the controller may parse the single instruction carrying the module selecting parameter and the module operating parameter by using an instruction decoder, thereby generating a control signal, so that the operation apparatus forms a operation path corresponding to the single instruction.

It can be understood that the neural network needs to perform multi-layer operation in the running process. In the traditional neural network, different network structures may need to be set up for different layer operations, and the hardware resources are consumed greatly; the operation apparatus provided by this embodiment can support multi-functional multiplexing, and it only needs to determine the operation path of the operation apparatus according to the single instruction, operations of all layers of the neural network can be implemented by the operation apparatus, and corresponding hardware structure needs not be set up for per-layer operation, the existing computing hardware in the operation apparatus is shared by way of combinations, which greatly saves hardware resources for computing and improves hardware utilization.

The operation apparatus is configured to be connected with the operation path corresponding to the current single instruction under control of the controller, and perform operation on input data of the operation apparatus in the current layer operation by using the operation path corresponding to the current single instruction, generate output data of the current layer operation; wherein the input data of the current layer operation is output data obtained by the operation apparatus from a previous layer operation; when the current layer is the first layer, the input data of the first layer operation is an image to be processed. The operation apparatus provided in this embodiment may also be referred to as an Execution Unit (EU), after the input data passes through the EU, operation of one network structure layer in the running process of the neural network is completed, and all layers only need to use the same EU repeatedly, then the entire operation process of the neural network can be realized, the corresponding single instruction is read during per-layer operation, and the EU is compiled into a network structure capable of implementing the operation of the layer, the input data flows through the operation path formed by the network structure, then the output data is obtained; the output data may be used as the input data of the next layer, and is re-entered into an input terminal of the EU, such reciprocating execution can realize the operation of all layers and obtain a final result. This manner can better alleviate the problem of easy waste of hardware resources due to that multiple EUs are needed in a hardware device for implementing the neural network to perform operations of different layers.

With the operation execution device provided above by the embodiment of the present disclosure, a controller can control, by means of parsing a current single instruction corresponding to a current layer operation as required by the operation apparatus, the operation apparatus to be connected with the operation path corresponding to the current single instruction, so as to perform the current layer operation. This manner can control the same operation apparatus to compile so as to form different network structures based on the single instruction, that is, it can realize logical operations of all layers of the neural network. It is not necessary to separately set up corresponding hardware for different network structures, which greatly saves the hardware resources and effectively improves utilization of the hardware resources.

In a specific implementation, the single instruction carries a parameter list, the parameter list exhibits the module selecting parameter and the module operating parameter one by one. When the operation apparatus executes the operation of each layer, it is only necessary to parse the corresponding single instruction, the required functional operation modules and module operating parameters can be determined.

For ease of understanding, description is provided with the single instruction being CONV[LINES=0, KERNELSIZE1=3, KERNELSIZE2=3, STRIDE=2, QUANTIZING=1, QUANTIZINGBIT=k, OUTPUTCHANEL=n, UNPOOLSIZE=2] as an example, When the controller reads the instruction, the operation path corresponding to the single instruction of the multiplexing neural network architecture can be determined.

Specifically, whether the deconvolution processing or the convolution processing is to be performed may be selected by LINES, so as to determine the corresponding functional operation module; for example, LINES=0 corresponds to the deconvolution processing, so data is selected to be inputted to the unpooling module, the unpooling processing is performed by the unpooling module, to be further equivalent to the deconvolution processing; KERNELSIZE1 and KERNELSIZE2 are respectively the N value and the M value of the convolution kernel parameter N*M, wherein the N value and the M value may be the same or different. When the instruction is parsed, whether or not the fully connected operation is to be performed may be determined according to whether N*M is equal to 1*1. UNPOOLSIZE=2 indicates the unpooling parameter corresponding to the unpooling module. According to the value of UNPOOLSIZE, it may be determined whether the unpooling module is selected in the operation path corresponding to the instruction.

STRIDE indicates a stride of the convolution module. Whether to perform a pooling processing after the convolution processing may be determined according to whether STRIDE is 1, thereby a running mode of the convolution module can be determined. Specifically, when STRIDE=1, it indicates that the convolution module only corresponds to the convolution operation, and does not perform the pooling operation; when STRIDE=2, 3, 4..., it indicates that the convolution module needs to perform pooling operation after the convolution operation.

Whether the quantizing processing is to be performed may be determined by the value of QUANTIZING, for example, QUANTIZING=1 corresponds to that the quantizing processing needs to be performed, QUANTIZING=0 corresponds to that no quantizing processing needs to be performed; and according to the value k in QUANTIZINGBIT=k, when the quantizing module is performing the quantizing processing, the k-bit quantizing manner may be used to replace the nonlinear activation function to introduce nonlinearity into the neural network, thereby improving reliability and robustness of the neural network operation.

In addition, OUTPUTCHANEL=n indicates the channel parameters of the concat module.

The instruction provided in this embodiment is a minimal neural instruction set computer (MNISC), that is, only a single instruction carrying a parameter list, and the parameter selecting parameters such as LINES and QUANTIZING are included in the parameter list, and the module operating parameters such as KERNELSIZE1, KERNELSIZE2, STRIDE, QUANTIZINGBIT, OUTPUTCHANEL, UNPOOLSIZE are also included therein. Among them, values of the module operating parameters such as STRIDE, KERNELSIZE1 and KERNELSIZE2 also directly determine the functions that can be realized by the corresponding functional operation modules (such as the convolution module); the module operating parameters such as UNPOOLSIZE also have the meaning of module selection characterizing on the one hand, that is, whether the corresponding functional operation module is selected can be determined according to its value, on the other hand, it also represents the operating parameter of the functional operation module; UNPOOLSIZE=2 indicates that the unpooling module is selected on the one hand, and on the other than it indicates that the operating parameter of the unpooling module is to expand the length and width of the original feature image to twice the original length and width.

It should be noted that the above parameters are only illustrative, the single instruction parameter may be flexibly defined in practical applications. For example, LINES=0 may be defined as corresponding to that a deconvolution processing is required, and LINES=1 may be also defined as corresponding to that a deconvolution processing is required. Of course, other values may be also defined as corresponding to that a deconvolution processing is required, it only needs to make the controller parse through an instruction decoder according to the predefined parameter, no limitations is made to parameter settings herein.

Compared with that multiple instructions are required in each operation processing in the prior art, the MNISC provided by this embodiment only relies on the simple form of the single instruction carrying the parameters, so that the controller can determine corresponding network structure of the operation apparatus according to the single instruction, so as to perform corresponding computing operations, it is very convenient and efficient. When the parameters carried by the single instruction are different, the corresponding operation paths of the operation apparatus are different, and different computing logic results can be obtained. Since the same operation apparatus (that is, the execution unit EU) can implement operations of all layers, the corresponding single instruction can be read at the time of per-layer operation, and the operation path of operation of the layer in the EU can be determined through the single instruction.

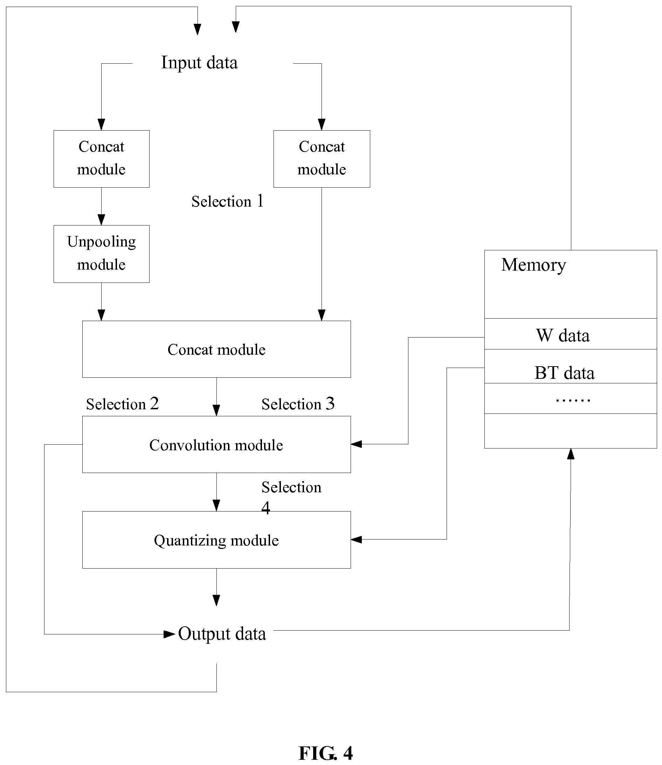

For ease of understanding, the operation process of the operation execution device provided in this embodiment is exemplarily described with reference to FIG. 4 to FIG. 9.

First, referring to the schematic diagram of structure of an operation execution device shown in FIG. 4, the operation apparatus (the multiplexing neural network architecture) and the memory (including data required by respective functional operation modules, such as weight data W data, threshold data BT data, convolution kernel parameters, etc.) are illustrated, the memory also stores a set of a plurality of single instructions of the network structure, specifically it may be stored in an instruction register in the memory. For the sake of simplicity, the controller is not directly illustrated in FIG. 4. However, in essence, parsing of the single instruction, selection of respective functional operation modules, and reading of data are all controlled by the controller. In addition, FIG. 4 shows the following selection nodes affecting selection of the functional operation module (a selection result is always determined by the controller according to the parameters carried in the single instruction):

Selection 1: deconvolution or not; this selection result depends on whether the input data flows through the unpooling module. In this embodiment, the unpooling module is adopted to perform the unpooling processing, so as to achieve the effect of the deconvolution processing. In a specific implementation, the unpooling module being followed by the convolution module may be adopted, so as to replace the deconvolution module. Specifically, it may be determined based on the LINES value in the single instruction.

Selection 2: Whether to pool; this selection result depends on whether the convolution module performs a pooling operation after the convolution operation, and whether the stride of the convolution module is greater than 1 during the running process. Specifically, it may be determined based on the STRIDE value in the single instruction.

Selection 3: Fully connected or not; this selection result depends on whether the convolution module includes a convolution layer with a convolution kernel size of 1*1. Specifically, it may be determined based on the KERNELSIZE1 value and the KERNELSIZE2 value in the single instruction.

Selection 4: Determine whether to quantize and quantize to k bit. This selection depends on whether the data outputted from the convolution module further needs to be quantized by the quantizing module and introduce nonlinearity. Specifically, it may be determined based on the QUANTIZING value and the QUANTIZINGBIT value in the single instruction.

In addition, FIG. 4 also shows the output data obtained from that the input data passes through the operation apparatus, and the output data can be stored in the memory. Since operations of all layers of the multiplexing neural network architecture can adopt the operation apparatus, the output data obtained by the operation apparatus at a certain layer may be inputted to a start terminal of the operation apparatus as the input data of the operation of the next layer.

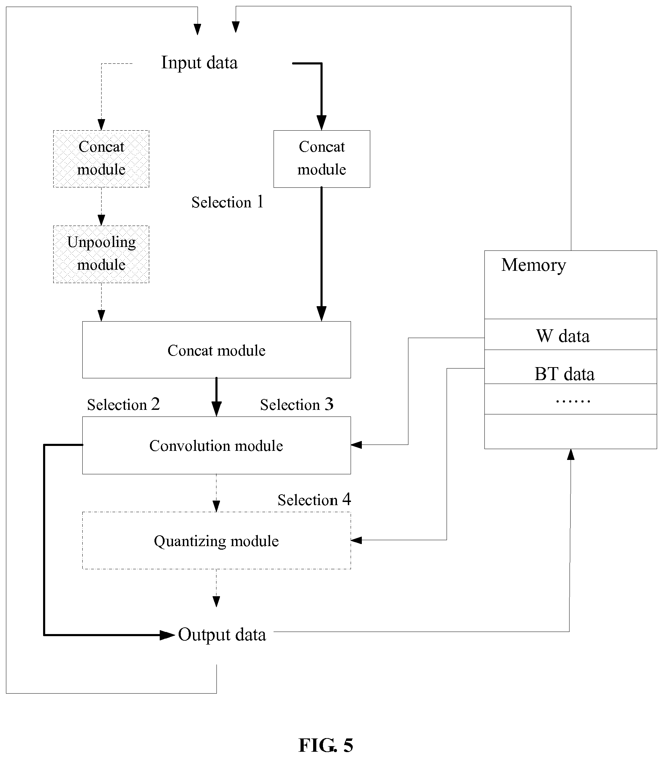

On the basis of FIG. 4, referring to the schematic diagram of a convolution processing of an operation execution shown in FIG. 5, in the multiplexing neural network architecture shown in FIG. 5, the operation path of the convolution processing is the concat module and the convolution module, thereafter the convolution result may be directly outputted by the convolution module. In the multi-layer operation of the neural network, all the convolution layers may be implemented by the operation path shown in FIG. 5. In the convolution processing, the selection result of Selection 1 is that the data pass through the concat module and enters the convolution module, the unpooling module is not used, so the unpooling module in FIG. 1 is filled with a gray background to clearly indicate that the module is not selectable. However, some of the operation layers involved with the convolution processing may also need to be quantized after the convolution, so the data outputted by the convolution module may also be inputted to the quantizing module, thus the quantizing module in FIG. 5 is represented by a dashed box, indicating that it is nonessential, and may be flexibly selected according to the needs of the operation layer. In addition, according to the stride parameter in the single instruction, the result of Selection 2 may also be determined, that is, whether the convolution module is followed by a pooling operation after the convolution operation to successively implement the convolution processing and the pooling processing.

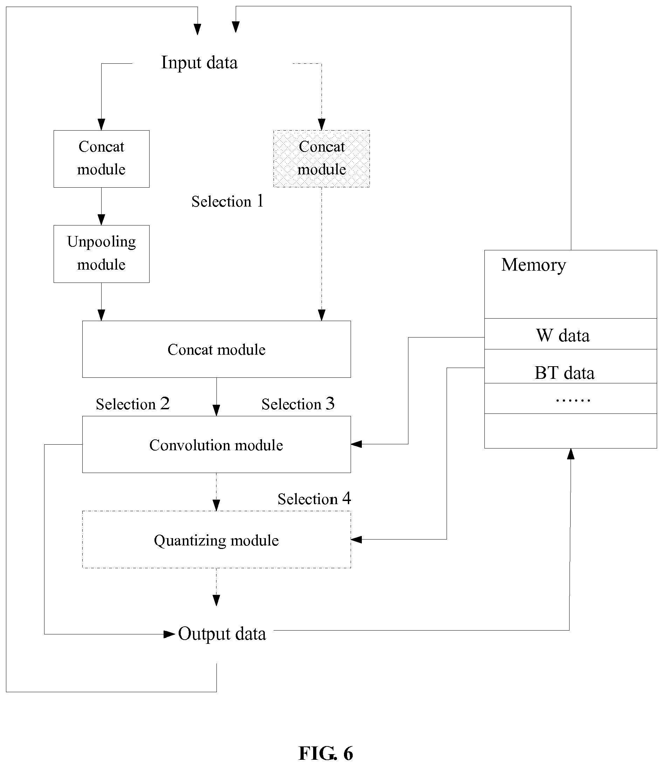

Correspondingly, referring to the schematic diagram of a deconvolution processing of an operation execution device shown in FIG. 6, in the multiplexing neural network architecture shown in FIG. 6, the operation path of the deconvolution processing may include a concat module, an unpooling module, and a convolution module, then the convolution result may be directly outputted by the convolution module. Since in the deconvolution processing, the selection result of Selection 1 is that the data needs to be processed by the unpooling module, in the multiplexing neural network architecture provided in FIG. 6, the original concat module for the convolution processing (the concat module in the right part of FIG. 6) is filled with a gray background to clearly indicate that the module is not selectable. Similarly, in FIG. 6, the quantizing module is nonessential and may be flexibly selected according to the needs of the operation layer.

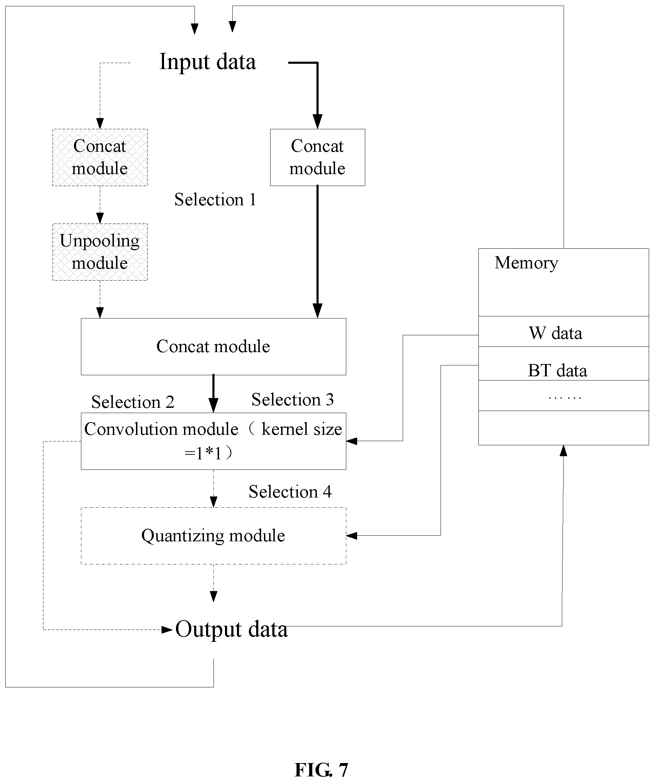

Referring to the schematic diagram of a fully connected processing of an operation execution device shown in FIG. 7, in the multiplexing neural network architecture shown in FIG. 7, the operation path of the fully connected processing includes a concat module and a convolution module, in the fully connected processing, the result of Selection 3 is that the convolution kernel size of the convolution module is kernel size=1*1, so that the convolution module with the convolution kernel size of 1*1 is selected to complete the fully connected processing.

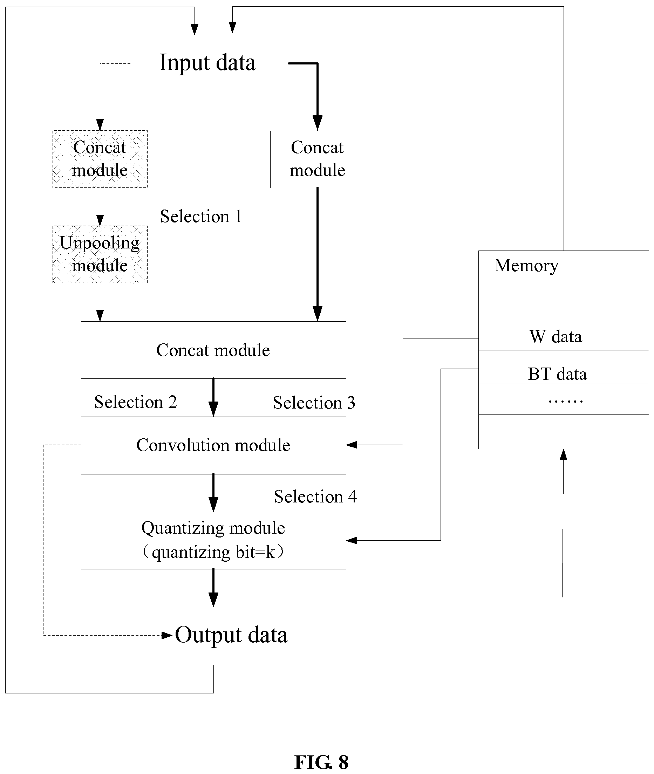

Referring to the schematic diagram of a quantizing processing of an operation execution device shown in FIG. 8, in the multiplexing neural network architecture shown in FIG. 8, the operation path of the quantizing processing includes a concat module, a convolution module and a quantizing module, in the quantizing processing, the result of Selection 4 is including a quantizing module and quantizing to k bit, so that the quantizing module having the quantizing parameter quantizing bit=k is selected to achieve the quantizing processing.

It should be noted that FIG. 4 to FIG. 8 provided in this embodiment are only for simple schematic description. In practical applications, the operation apparatus can flexibly set the type, number, and connection relationship of the functional operation modules to implement different operation paths, thereby achieving different computing logics.

In summary, the operation execution device provided in this embodiment can determine the operation path in the operation apparatus device according to the MNISC (a single instruction carrying the parameter), thereby implementing various operation processing, and operations of all layers of the neural network can be implemented by adopting the operation execution device, which greatly saves hardware resources and improves hardware utilization.

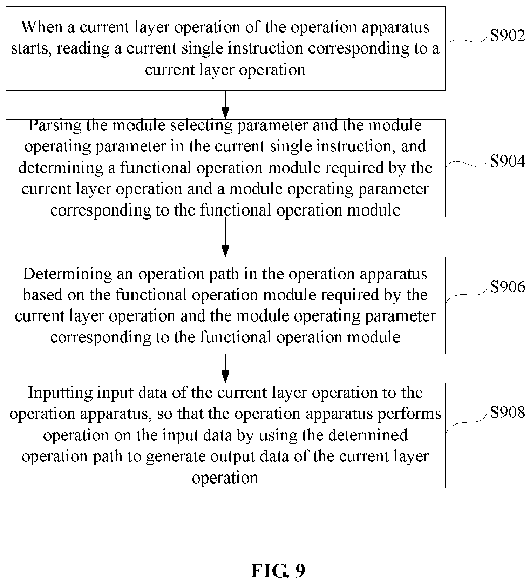

Based on the operation execution device as stated above, this embodiment provides an operation execution method, this method is applied to the operation execution device as stated above, referring to the flowchart of an operation execution method shown in FIG. 9, this method is executed by a controller of the operation execution device, and may specifically include the following steps:

Step S902, when a current layer operation of the operation apparatus starts, reading a current single instruction corresponding to a current layer operation;

Step S904, parsing the module selecting parameter and the module operating parameter in the current single instruction, and determining a functional operation module required by the current layer operation and a module operating parameter corresponding to the functional operation module;

Step S906, determining an operation path in the operation apparatus based on the functional operation module required by the current layer operation and the module operating parameter corresponding to the functional operation module; wherein the operation path is composed by connecting the functional operation modules required by the current layer operation;

Step S908, inputting input data of the current layer operation to the operation apparatus, so that the operation apparatus performs operation on the input data by using the determined operation path to generate output data of the current layer operation; wherein the input data of the current layer operation is output data obtained by the operation apparatus from a previous layer operation; when the current layer is the first layer, the input data of the first layer operation is an image to be processed. It can be understood that network parameters corresponding to the respective operation layers are also stored in the memory, which specifically are parameters required by the functional operation module corresponding to each operation layer at the time of operation, such as weight data W data, threshold data BT data, and the convolution kernel parameter etc. When the controller inputs the input data of the current layer operation to the operation apparatus, the controller also reads the network parameters of the current layer from the memory, and the controller can determine the operation path of the operation apparatus based on the single instruction stored in the memory, then perform operation on the input data in combination with the read network parameters, to generate the output data.

In the operation execution method provided above by the embodiment of the present disclosure, a controller can control, by means of parsing a current single instruction corresponding to a current layer operation as required by the operation apparatus, the operation apparatus to be connected with the operation path corresponding to the current single instruction, so as to perform the current layer operation. This manner can control the same operation apparatus to compile so as to form different network structures based on the single instruction, thus implementing logical operations of all layers of the neural network. It is not necessary to set up corresponding hardware for different network structures separately, which greatly saves the hardware resources and effectively improves utilization of the hardware resources.

A person skilled in the art can clearly understand that, for convenience and brevity of the description, as for the specific working process of the above method, and related content (such as the operation path, the single instruction, etc.), reference may be made to the corresponding process in the foregoing embodiment, no details repeated herein.

Furthermore, this embodiment further provides a non-transitory computer-readable storage medium having stored thereon a computer program , wherein steps of the information interaction method provided above in the foregoing embodiment are executed when the computer program is run by a processing device.

The computer program products of the operation apparatus, the operation execution device and the operation execution method provided by the embodiments of the present disclosure includes a computer-readable storage medium storing program codes, and the program codes include instructions for executing the method described in the above method embodiments. As for specific implementations, reference may be made to the method embodiments, details are not repeated herein.

In addition, in description of the embodiments of the present disclosure, unless otherwise expressly specified and limited, the terms "installation", "connected", "connection" should be broadly understood, for example, it may be fixedly connected, or removably connected, or integrally connected; it may also be mechanically connected, or electrically connected; it may also be directly connected, or indirectly connected through an middleware, or two components may be internally communicated. For a person of ordinary skill in the art, the specific meaning of the aforesaid terms in the present disclosure should be understood according to practice.

The above functions may also be stored in one computer-readable storage medium when being implemented in the form of a software functional module and sold and used as an independent product. Based on such understanding, the substance or the part that contributes to the prior art of the technical solutions of the present disclosure or the technical solution part may be reflected in the form of a software product, the computer software product may be stored in one storage medium, and include several instructions for causing a computer device (which may be a personal computer, a server, or a network device) to fully or partially perform the method described in the various embodiments of the present disclosure. The aforesaid storage medium includes various mediums capable of storing program codes like a mobile storage device, a Read Only Memory (ROM), a magnetic disk, or an optical disk.

In description of the present disclosure, it should be noted that, orientation or positional relationship indicated by the terms "center", "upper", "lower", "left", "right", "vertical", "horizontal", "inside", "outside", etc. are orientation or positional relationship based on the drawings, which are merely for convenience of describing the present disclosure and simplifying the description, rather than indicating or implying that the device or component referred to must have a specific orientation, or must be constructed and operated with a specific orientation, they should not be construed as limiting the present disclosure. Moreover, the terms "first", "second" and "third" are used for descriptive purposes only and are not to be construed as indicating or implying relative importance.

Last, it should be noted that, the above embodiments are merely specific implementations adopted for explaining the technical solutions of the present disclosure, rather than limiting the present disclosure, the protection scope of the present disclosure is not limited thereto. Although the present disclosure has been described in detail with reference to the above embodiments, a person of ordinary skill in the art should understand that, within the technical scope revealed by the present disclosure, various modifications may also be made to the technical solutions recorded in the preceding embodiments or changes may be made thereto easily, or parts of the technical features thereof may be replaced by equivalents, and essence of the corresponding technical solutions with these modifications or replacements still falls into the spirit and scope of the technical solutions in the embodiments of the present disclosure. These modifications, changes, and substitutions do not make the corresponding technical solutions depart from the spirit and scope of the technical solutions in the embodiments of the present disclosure, they should be within the protection scope of the present disclosure. Therefore, the protection scope of the present disclosure should be determined by the scope of the appended claims.

## Claims

1. An operation apparatus, wherein the operation apparatus is configured to implement a multiplexing neural network architecture, the operation apparatus includes a plurality of functional operation modules, and the functional operation modules include at least one of: a concat module, an unpooling module, a convolution module and a quantizing module;
the plurality of functional operation modules are connectable by way of combinations to form a plurality of operation paths; wherein each of the operation paths is used to implement a computing logic; the computing logic includes at least one of: a convolution processing, a deconvolution processing, a pooling processing, a quantizing processing and a fully connected processing.

2. The apparatus according to claim 1, wherein each of the functional operation modules corresponds to one or more operation types; wherein the operation types include a concat operation, an unpooling operation, a convolution operation, a pooling operation, a quantizing operation, a nonlinear operation or a fully connected operation.

3. The apparatus according to claim 1, wherein each of all of the operation paths includes at least the concat module and the convolution module.

4. The apparatus according to claim 3, wherein a first operation path further includes the unpooling module, and the convolution module is connected after the unpooling module, so as to implement a deconvolution processing.

5. The apparatus according to claim 3, wherein in a second operation path, the convolution module includes a convolution layer having a convolution kernel size of 1*1 to implement a fully connected processing.

6. The apparatus according to claim 3, wherein a third operation path further includes a quantizing module, and the quantizing module is disposed at an end of the third operation path, so as to implement a quantizing processing.

7. The apparatus according to claim 3, wherein a fourth operation path includes only the concat module and the convolution module, so as to implement a convolution processing.

8. The apparatus according to claim 2, wherein the convolution module includes a convolution layer with a stride;
the convolution module is used to implement the convolution operation when the stride of the convolution layer is 1, and the convolution module is used to implement the convolution operation and the pooling operation when the stride of the convolutional layer is not 1.

9. The apparatus according to claim 2, wherein the quantizing module implements parameter compression and non-linear operation by quantizing a floating point value to a low bit value.

10. The apparatus according to claim 1, wherein the functional operation module further includes a deconvolution module, a pooling module or a fully connected module.

11. An operation execution device, comprising: a controller, a memory and the operation apparatus according to any one of claims 1 to 10; the memory is configured to store a preset single instruction set; the single instruction set includes a single instruction corresponding to a per-layer operation when the operation apparatus performs a multi-layer operation; each of the single instructions includes a module selecting parameter and a module operating parameter;
the controller is configured to read, from the memory, a current single instruction corresponding to a current layer operation as required by the operation apparatus, and parse the module selecting parameter and the module operating parameter included in the current single instruction, so as to determine a operation path corresponding to the current single instruction; the controller is further configured to send a control signal to the operation apparatus, so that the operation apparatus is connected with the operation path corresponding to the current single instruction;
the operation apparatus is configured to be connected with the operation path corresponding to the current single instruction under control of the controller, and perform operation on input data of the operation apparatus in the current layer operation by using the operation path corresponding to the current single instruction, generate output data of the current layer operation; wherein the input data of the current layer operation is output data obtained by the operation apparatus from a previous layer operation; when the current layer is the first layer, the input data of the first layer operation is an image to be processed.

12. The device according to claim 11, wherein the single instruction carries a parameter list, the parameter list exhibits the module selecting parameter and the module operating parameter one by one.

13. An operation execution method, the method being applied to the operation execution device of claim 12, the method being executed by a controller of the operation execution device, the method comprising:
when a current layer operation of the operation apparatus starts, reading a current single instruction corresponding to a current layer operation;
parsing the module selecting parameter and the module operating parameter in the current single instruction, and determining a functional operation module required by the current layer operation and a module operating parameter corresponding to the functional operation module;
determining a operation path in the operation apparatus based on the functional operation module required by the current layer operation and the module operating parameter corresponding to the functional operation module; wherein the operation path is composed by connecting the functional operation module required by the current layer operation;
inputting input data of the current layer operation to the operation apparatus, so that the operation apparatus performs operation on the input data by using the determined operation path to generate output data of the current layer operation; wherein the input data of the current layer operation is output data obtained by the operation apparatus from a previous layer operation; when the current layer is the first layer, the input data of the first layer operation is an image to be processed.

14. A non-transitory computer-readable storage medium having stored thereon a computer program, wherein steps of the method of claim 13 are carried out when the computer program is executed by a processor.
